# EUROPEAN PATENT SPECIFICATION

(11) **EP 3 734 914 B1**
(45) Date of publication and mention of the grant of the patent: **06.09.2023**
(21) Application number: 20165348.2
(22) Date of filing: 18.04.2013
(51) Int. Cl.: H04L 51/046, H04L 51/52

(54) **AUTHENTICATION OF SERVICE REQUESTS**
AUTHENTIFIZIERUNG VON DIENSTANFORDERUNGEN
AUTHENTIFICATION DE DEMANDES DE SERVICE

(30) Priority: 18.04.2012 US 201261625984 P; 14.03.2013 US 201313829708
(43) Date of publication of application: 04.11.2020
(62) Divisional of application: 13720650.4
(73) Proprietor: LIVEPERSON, INC., New York NY 10018 (US)
(72) Inventor: BARAK, Matan, New York, NY New York 10018 (US); LEWIS, Todd, New York, NY New York 10018 (US); MULHEARN, Justin, Robert, New York, NY New York 10018 (US)
(74) Representative: Mewburn Ellis LLP

(56) References cited:
- WO-A2-2010/144207
- US-A1- 2010 063 879
- US-A1- 2011 270 926

## Description

### TECHNICAL FIELD

The technical field relates generally to computer-based methods and apparatuses, including computer program products, for authentication of service requests.

### SUMMARY OF THE INVENTION

The invention consists of a computerized method such as claimed in the attached independent claim 1, as well as the system and the computer program product respectively claimed in independent claims 10 and 11. Further advantageous aspects of the invention are included in the dependent claims.

The techniques, which include both methods and apparatuses, described herein can provide one or more of the following advantages. Website links, such as HTTP links, can be authenticated based on the user that invoked the link, as well as pre-defined criteria for the link, such as an expiration time, a number of users that can invoke the link, and/or the like. Data received about service requests and/or the users that invoke the service requests can be used to appropriately tailor the service request for each user.

The current invention is meant to improve prior art systems for processing a service request through a social media message such as disclosed in patent document US 2010/063879 A1. Further prior art teachings for authenticating service requests in the field of social networking are disclosed in patent document US 2011/270926 A1.

### BRIEF DESCRIPTION OF THE DRAWINGS

Figures 1 to 4 refer to a different patent document included in appendix A. The content of said document as well as the related figures do not form part of the invention, but may be useful for a better understanding of the context of the invention.
FIG. 1 is a diagram of a system for implementing service requests for a social networking site;
FIGS. 2A and 2B are diagrams of an exemplary social networking page for a social networking site;
FIG. 3 is a flow chart showing an exemplary method for processing a service request ; and
FIG. 4 is a flow chart showing an exemplary method for authenticating a service request.
FIG. 5 is a flow chart showing the method for processing a service request according to the present invention.

### DETAILED DESCRIPTION

In general, computerized systems and methods are provided for creating links (e.g., web page links, such as HTML links) that can be authenticated by a server. Data about the links and/or the user(s) that invoke the links can be used to authenticate the link based on pre-defined criteria stored for the link. The service request links can be configured based on the pre-defined criteria. For example, the service request links can expire based on the pre-defined criteria such that the links can be invoked only for a predetermined period of time, can only be invoked by a predetermined number of users, can only be invoked by particular users (e.g., based on profile data of the user), etc. This data can be used to navigate the invoking user to the proper location (e.g., to a service request (such as chat or video), or to a particular web page).

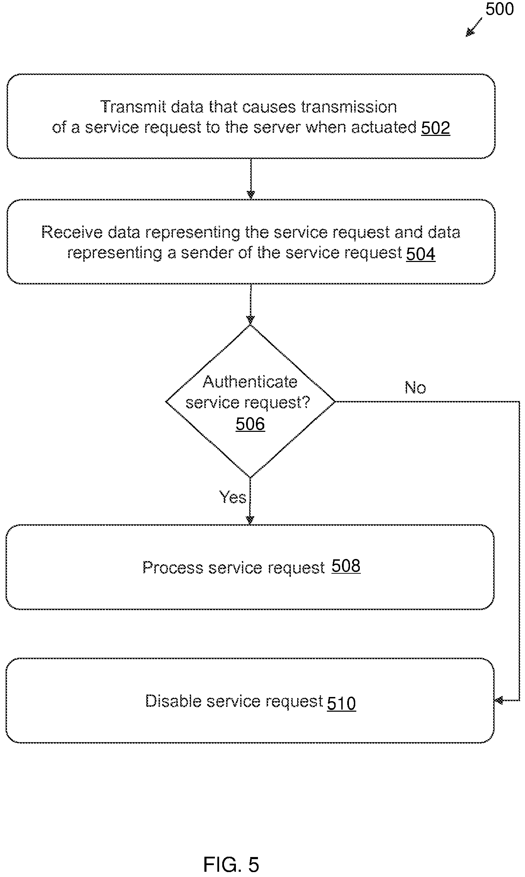

FIG. 5 is a flow chart showing the method 500 for processing a service request according to the present invention. At step 502, the server transmits data that causes transmission of a service request to the server when actuated. At step 504, the server receives data representing the service request and data representing a sender of the service request. At step 506, the server authenticates the service request. If the server authenticates the service request at step 506, the method proceeds to step 508, and the server processes the service request. If the server does not authenticate the service request at step 506, the method proceeds to step 510, and the server disables the service request.

Referring to step 502, the data that causes transmission of a service request to the server when actuated can be, for example, an HTTP link. For example, the link, when actuated (and authenticated as described with respect to step 506 below) can initiate any type of a service request, such as online text chat, audio chat, presentation of a support page (e.g., frequently asked questions), presentation of a coupon, video chat, and/or other types of service requests. The server can send service requests to a remote user for help with navigating a web page, to a remote user in response to a social media message (e.g., in response to a Twitter tweet or a Facebook post), to a remote user by email, a data messaging service (e.g., short messaging service (SMS)), etc. As is described further below, administrators of the server (and related components) can set pre-defined criteria for the service request (e.g., for an HTML link) that configure when the service request can be invoked (e.g., a time expiration).

Referring to step 504, the data representing the service request can include, for example, data about the service request (e.g., about an HTML link), and/or data about the user that invoked the service request (e.g., about the user that clicked the HTML link). For example, if the server transmits an HTML link to a web page, the data representing the service request can include identifying data for the service request (e.g., so the system can identify which service request was invoked), a number of, times the HTML link was invoked prior to the current invocation (e.g., a number of times the link was clicked), an amount of time the HTML link has been on the web page, and/or other data about the service request.

Referring further to step 504, the data representing a sender of the service request can include data about the party that invoked the service request. For example, this data may include social networking information, as described in Appendix A (e.g., a user profile for the user from the social networking site).

Referring to step 506, the server authenticates the service request. For example, unless certain properties of the service request are satisfied (e.g., a time limit has not expired, a pre-set number of users have not already invoked the service request, the invoking user matches pre-defined criteria (e.g., the service request was sent to the user, the user is a follower of a social networking site, located in a particular geographic location, and/or the link)), then the server will not authenticate the service request.

Referring further to step 506, the server can compare the data received at step 504 with stored data for the service request. For example, in some embodiments the server compares (a) the data representing the service request, the data representing the sender of the service request, or both, against (b) pre-defined criteria associated with the data the server transmitted in step 502. For example, the pre-defined criteria can be defined by the system administrator. For example, for an HTTP link, the administrator can set a number of times the link can be clicked before the link expires (e.g., can no longer be clicked by a user to invoke the service request), an amount of time the link is active until the link expires, required social networking profile information (e.g., indicative of the originator, such as geographical location and/or other user profile information), etc.

Referring further to step 506, if the server authenticates the service request such that the pre-defined criteria are satisfied (e.g., if the time limit associated with the service request has not expired, if the maximum number of users has not invoked the service request, if the social networking data associated with the user that invoked the request matches the pre-defined criteria, etc.), the server processes the service request at step 508. The server can process the service request by setting up the service request, such as by transmitting a coupon to the sender, setting up an online chat with the sender, setting up a video chat with the sender, sending the user to a help page, and/or setting up any other type of service request.

If the server determines the service request is not authenticated (e.g., if the time limit associated with the service request expired, if the maximum number of users already invoked the service request, if the social networking data associated with the user that invoked the request does not match the pre-defined criteria, etc.), then the server disables the service request at step 510. For example, the server may transmit back to the sender an HTTP error page, a blank page, a page that indicates the link expired and therefore will not be completed, etc.

The authentication allows administrators and agents of the server to create and/or reconnect service requests (e.g., click-to-chat links) that can be limited to a number of users, time expirations, social networking attributes of the sender, etc. For example, if an agent is communicating with a user via online chat and the conversation is dropped, the server can create a link that allows the visitor to return back to the agent he was chatting with, but will only work based on pre-defined criteria associated with the link (e.g., a set number of clicks, time expiration, etc.). The link itself can be sent to the visitor as a regular HTTP link, as SMS, email, or via the original chat itself.

As an example, assume an agent is engaged in a service request with a user (e.g., online chat), and the agent needs to re-boot their computer. The agent can send the user a link so agent can be re-connected with the user after the reboot to resume their conversation. Advantageously, while the server can transmit a link that allows the user to re-engage the service request, the system can use pre-defined criteria to ensure only the same user can re-engage the service request (e.g., based on social networking data), and that the agent is still connected to the system (e.g., limit the link's active time to one hour).

As another example, assume an agent is busy but wants to talk (e.g., online chat, video chat, voice chat) with a user, and the agent determines the best time for a chat is between 4-5 PM EST. The agent (via the server) can send the user a link that is valid only from 4-5 PM (e.g., if the user clicks the link between 4-5 PM, the server will process the service request, otherwise the server will not process the service request). For example, if the user clicks the link outside of the 4-5 PM window, then the server can redirect the user to a landing page.

As another example, the server can use the links to initiate a can sequence, For example, the agent may be available for a call before 5 PM that day. The server can send the user a link that is valid only until 5 PM (e.g., if the user clicks the link any time before 5 PM that day, the server will process the service request, otherwise the server will not process the service request). If properly invoked, the server will initiate a call sequence between the user and the agent.

As another example, the server can use the links for an advertisement campaign (e.g., for marketing content). The server can send links such that the first users that click the link (e.g., the first 100 users) get a special discount (e.g., are presented with a coupon). As another example, the link can be used to keep track of a number of times people scan a bar code to keep track of how many users scan the code. The user can then be presented with a coupon related to the bar code, establish a service request (e.g., chat), and/or the like.

As another example, the validation can validate the sender that invokes the service request (e.g., to verify the sender). For example, social networking parameters (e.g., a profile page) can be used to verify the sender (e.g., if the request is transmitted from a social networking site). For example, a company may monitor tweets posted to Twitter. The company may see a tweet that states "1 don't like the services of Company." The Company can use the server (e.g., manually or automatically) to send a link to the author of the tweet to invoke a service request. For example, the link can be used to invoke a chat with a Company representative (via online chat, video chat, etc.) to discuss their dislikes of the Company, to send the user to a support page to help explain the Company's services, etc. The link, once clicked, can navigate the user to any type of service request channel (such as chat, video, a support page, etc.) based on the time the link exists, the number of clicks, and/or the social parameters of the user (e.g., who the user is, and what the user's location is, etc.). As an example, the social parameters can be used to navigate visitors from Europe to a European chat page, visitors from the US to a US chat page, etc. The social networking parameters can be used to tailor how the service request channels are invoked for each particular user.

The above-described techniques can be implemented in digital and/or analog electronic circuitry, or in computer hardware, firmware, software, or in combinations of them. The implementation can be as a computer program product, i.e., a computer program tangibly embodied in a machine-readable storage device, for execution by, or to control the operation of, a data processing apparatus, e.g., a programmable processor, a computer, and/or multiple computers. A computer program can be written in any form of computer or programming language, including source code, compiled code, interpreted code and/or machine code, and the computer program can be deployed in any form, including as a stand-alone program or as a subroutine, element, or other unit suitable for use in a computing environment. A computer program can be deployed to be executed on one computer or on multiple computers at one or more sites.

Method steps can be performed by one or more processors executing a computer program to perform functions of the invention by operating on input data and/or generating output data. Method steps can also be performed by, and an apparatus can be implemented as, special purpose logic circuitry, e.g., a FPGA (field programmable gate array), a FPAA (field-programmable analog array), a CPLD (complex programmable logic device), a PSoC (Programmable System-on-Chip), ASIP (application-specific instruction-set processor), or an ASIC (application-specific integrated circuit). Subroutines can refer to portions of the computer program and/or the processor/special circuitry that implement one or more functions.

Processors suitable for the execution of a computer program include, by way of example, both general and special purpose microprocessors, and any one or more processors of any kind of digital or analog computer. Generally, a processor receives instructions and data from a read-only memory or a random access memory or both. The essential elements of a computer are a processor for executing instructions and one or more memory devices for storing instructions and/or data. Memory devices, such as a cache, can be used to temporarily store data. Memory devices can also be used for long-term data storage. Generally, a computer also includes, or is operatively coupled to receive data from or transfer data to, or both, one or more mass storage devices for storing data, e.g., magnetic, magneto-optical disks, or optical disks. A computer can also be operatively coupled to a communications network in order to receive instructions and/or data from the network and/or to transfer instructions and/or data to the network. Computer-readable storage devices suitable for embodying computer program instructions and data include all forms of volatile and non-volatile memory, including by way of example semiconductor memory devices, e.g., DRAM, SRAM, EPROM, EEPROM, and flash memory devices; magnetic disks, e.g., internal hard disks or removable disks; magneto-optical disks; and optical disks, e.g., CD, DVD, HD-DVD, and Blu-ray disks. The processor and the memory can be supplemented by and/or incorporated in special purpose logic circuitry.

To provide for interaction with a user, the above described techniques can be implemented on a computer in communication with a display device, e.g., a CRT (cathode ray tube), plasma, or LCD (liquid crystal display) monitor, for displaying information to the user and a keyboard and a pointing device, e.g., a mouse, a trackball, a touchpad, or a motion sensor, by which the user can provide input to the computer (e.g., interact with a user interface element). Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, and/or tactile input. The above described techniques can also be implemented on mobile devices (e.g., a smartphone, a personal digital assistant device, a cellular telephone, a laptop).

The above described techniques can be implemented in a distributed computing system that includes a back-end component. The back-end component can, for example, be a data server, a middleware component, and/or an application server. The above described techniques can be implemented in a distributed computing system that includes a front-end component. The front-end component can, for example, be a client computer having a graphical user interface, a Web browser through which a user can interact with an example implementation, and/or other graphical user interfaces for a transmitting device. The above described techniques can be implemented in a distributed computing system that includes any combination of such back-end, middleware, or front-end components.

The computing system can include clients and servers. A client and a server are generally remote from each other and typically interact through a communication network. The relationship of client and server arises by virtue of computer programs running on the respective computers and having a client-server relationship to each other.

The components of the computing system can be interconnected by any form or medium of digital or analog data communication (e.g., a communication network). Examples of communication networks include circuit-based and packet-based networks. Packet-based networks can include, for example, the Internet, a carrier internet protocol (IP) network (e.g., local area network (LAN), wide area network (WAN), campus area network (CAN), metropolitan area network (MAN), home area network (MAN)), a private IP network, an IP private branch exchange (IPBX), a wireless network (e.g., radio access network (RAN), 802.11 network, 802.16 network, general packet radio service (GPRS) network, HiperLAN), and/or other packet-based networks. Circuit-based networks can include, for example, the public switched telephone network (PSTN), a private branch exchange (PBX), a wireless network (e.g., RAN, bluetooth, code-division multiple access (CDMA) network, time division multiple access (TDMA) network, global system for mobile communications (GSM) network), and/or other circuit-based networks.

Devices of the computing system and/or computing devices can include, for example, a computer, a computer with a browser device, a telephone, an IP phone, a mobile device (e.g., cellular phone, personal digital assistant (PDA) device, laptop computer, electronic mail device, iPhone available from Apple^{®}), a server, a rack with one or more processing cards, special purpose circuitry, and/or other communication devices. The browser device includes, for example, a computer (e.g., desktop computer, laptop computer) with a world wide web browser (e.g., Microsoft^{®} Internet Explorer^{®} available from Microsoft Corporation, Mozilla^{®} Firefox available from Mozilla Corporation, Chrome available from Google^{®}, Safari available from Apple^{®}, etc.). A mobile computing device includes, for example, a Blackberry^{®}. IP phones include, for example, a Cisco^{®} Unified IP Phone 7985G available from Cisco System, Inc, and/or a Cisco^{®} Unified Wireless Phone 7920 available from Cisco System, Inc.

The followina section of the descriotion ("Appendix A") describes authentication of service requests initiated from a social networking site. Although it is not part o fthe invention, but rathe of document US Patent Application No. 12/967 782, is useful for highlighting specific aspect of the claims.

US Patent Application No. 12/967 782 relates generally to computer-based methods and apparatuses, including computer program products, for authentication of service requests initiated from a social networking site.

With the advent of social networking sites (e.g., Facebook, Twitter, MySpace, LinkedIn, and other social networking sites), it has become increasingly common for people to publicly share information. Social networking sites typically allow a user to create and maintain their own unique user profile that contains personal information about themselves (e.g., their name, residence, hobbies, etc.). Once a user becomes a member of a social networking site, the user can communicate with other users of the social networking site (e.g., with a specific individual, with a group of individuals, or with all users of the social networking site).

A user can send messages or post updates to one or more other users (for example, at their own volition, or in response to a previous message or update from themselves or another user). These updates can include any type of information, often being limited only by the user's imagination. Some messages include status updates that describe what the user is currently doing at the time of the status update, or what the user intends to do in the near future. Some updates express a user's satisfaction (or dissatisfaction) with a product or experience. Some updates ask questions to other users of the social networking site. Depending on the context, it is desirable to monitor the content of the messages or updates and to allow the user or people (e.g., associated with the user in some way, such as a friend of the user, a contact of the user, members of the same group of the user) to initiate service requests.

The techniques described herein provide computerized methods, apparatuses, and computer program products for authentication of service requests initiated from a social networking site. Such authentication facilitates, for example, provisioning service requests to users of the social networking site only upon authorization of the requesting users.

There is disclosed a computerized method for auttienticating user service requests from a social networking site. The method includes monitoring, at a server, data representing messages posted at a social networking server. The method includes storing, by the server, data representing a selected message and an originator of the selected message. The method includes transmitting, from the server, data representing a reply to the originator of the selected message for posting at the social networking server, the reply including data that causes transmission of a service request to the server when actuated. The method includes receiving, at the server, data representing the service request and a sender of the service request. The method includes retrieving, by the server, data representing a user profile of the sender of the service request from the social networking server. The method includes comparing, by the server, one or more attributes of the user profile of the sender against one or more attributes of the stored data representing the originator of the selected message in order to verify the one or more attributes of the user profile. The method includes processing, by the server, the service request from the sender if the one or more attributes of the user profile of the sender match the one or more attributes of the stored data representing the originator of the selected message.

There is also disclosed a computer program product, tangibly embodied in a non-transitory computer readable medium. The computer program product includes instructions being configured to cause a data processing apparatus to monitor data representing messages posted at a social networking server. The computer program product includes instructions being configured to cause a data processing apparatus to store data representing a selected message and an originator of the selected message. The computer program product includes instructions being configured to cause a data processing apparatus to transmit data representing a reply to the originator of the selected message for posting at the social networking server, the reply including data that causes transmission of a service request to the server when actuated. The computer program product, includes instructions being configured to cause a data processing apparatus to receive data representing the service request and a sender of the service request. The computer program product includes instructions being configured to cause a data processing apparatus to retrieve data representing a user profile of the sender of the service request from the social networking server. The computer program product includes instructions being configured to cause a data processing apparatus to compare one or more attributes of the user profile of the sender against one or more attributes of the stored data representing the originator of the selected message in order to verify the one or more attributes of the user profile. The computer program product includes instructions being configured to cause a data processing apparatus to process the service request from the sender if the one or more attributes of the user profile of the sender match the one or more attributes of the stored data representing the originator of the selected message.

There is also disclosed an apparatus for authenticating user service requests from a social networking site. The apparatus includes a database configured to store data representing a selected message and an originator of the selected message. The apparatus includes a server in communication with the database with a processor and memory configured to monitor data representing messages posted at a social networking server. The server is configured to transmit data representing a reply to the originator of the selected message for posting at the social networking server, the reply including data that causes transmission of a service request to the server when actuated. The server is configured to receive data representing the service request and a sender of the service request. The server is configured to retrieve data representing a user profile of the sender of the service request from the social networking server. The server is configured to compare one or more attributes of the user profile of the sender against one or more attributes of the stored data representing the originator of the selected message in order to verify the one or more attributes of the user profile. The server is configured to process the service request from the sender if the one or more attributes of the user profile of the sender match the one or more attributes of the stored data representing the originator of the selected message.

The service request can be a request to initiate a chat session. Comparing can include comparing a person attribute in the user profile to a person attribute in the stored data representing the originator to determine whether the sender is the originator of the selected message. Comparing can include comparing a follower attribute in the user profile to a follower attribute in the stored data representing the originator to determine whether the sender is a follower of the originator of the selected message.

In some examples, comparing includes comparing a location attribute in the user profile to a location attribute in the stored data representing the originator to determine whether the sender is in a same location as the originator of the selected message. Retrieving the data representing a user profile can include transmitting data representing an access authorization to the sender of the service request for authorization to retrieve the data representing the user profile, and receiving data representing a response to the access authorization, the response including data indicative of the sender providing access authorization,

In other examples, processing the service request includes transmitting a request to a chat server to establish a chat between the sender of the service request and a third party. Data representing a second user profile of the originator of the selected message can be retrieved from a second social networking server. Data representing the reply can be transmitted to the originator at the second social networking server. An aggregated social media profile for the originator including the second user profile and the data representing the selected message and the originator of the selected message can be stored.

In some examples, the social networking server provides a social networking service to users, the social networking service including a social networking service provided by a social networking site selected from the group consisting of twitter.com, facebook.com. myspace.com, or any combination thereof. The service request can be an advertisement request, a support request, a voice call request, or any combination thereof.

In other examples, the social networking server provides a social networking service to users, the social networking service including a social networking service provided by a social networking site selected from the group consisting of twitter.com, facebook.com, myspace.com, or any combination thereof. The server can include a user interface configured to display the data representing messages posted at the social networking server.

The techniques, which include both methods and apparatuses, described herein can provide one or more of the following advantages. Information can be retrieved from social networking sites based on keywords and reacted to as desired (e.g., by a predefined set of rules). If, for example, a message posted by an originating user includes one or more keywords of interest, a response (e.g., posted reply message) can be sent to the originator of the message that includes invocable data to initiate a service request by a user of the social networking site (e.g., by the originator or other users of the social networking site). Once initiated, the system can authenticate the initiator of the service request (e.g., based on a user profile of the initiator) to verify that, for example, the service request is only granted to a desired audience of the social networking site (e.g., to verify that the initiator profile matches the originator profile, or the initiator profile is related to the originator profile). Advantageously, services such as advertisements, chat services, live help, and other services can be provided to a targeted group of users of social networking sites.

Social. media profiles can be created for users of the social networking site that includes account information for the users aggregated across a plurality of social networking sites to which the user belongs (e.g., for users that post messages that are responded to by the system described herein). The aggregated social media profile can be used to respond to an originator of a message at any one of the originator's many social media services. Advantageously, the targeted group of users for the services is spread across multiple social networking sites.

In general overview, computerized systems and methods are provided for provisioning services to authenticated users of social networking services provided by social networking sites. Social networking sites (or social media) can be monitored so that messages of interest (e.g., posted by users of the social networking sites) are responded to and provided with invocable data to initiate a service request. The actuator of the service request (which can be the originator of the identified message or another user of the social networking site) is authenticated before providing the actuator with the service associated with the service request In some examples, the user profile (or data profile, e.g., which is requested from the social networking site) associated with the actuator of the service request is compared against the stored data for the associated identified message (e.g., a user profile for the user that initiated the associated identified message) to authenticate one or more attributes between the originator of the identified message and the actuator of the service request.

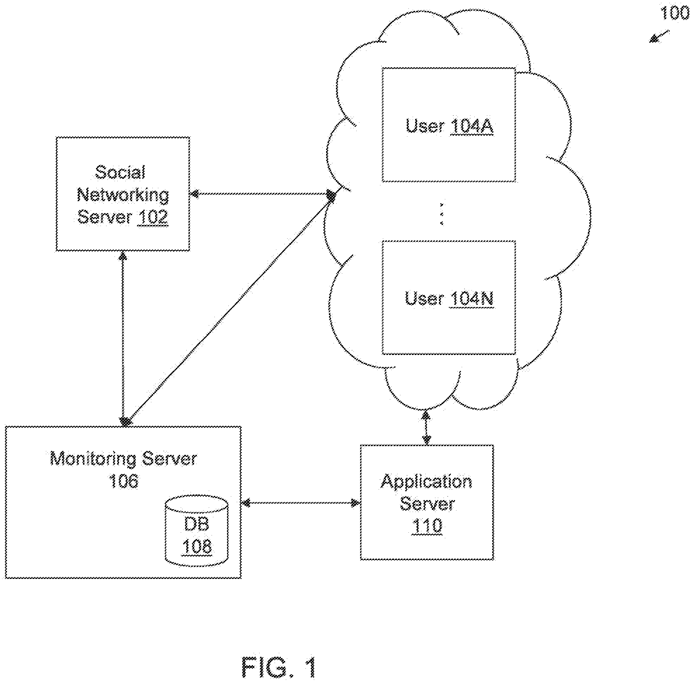

FIG. 1 is an exemplary diagram showing an exemplary system 100 for implementing service requests for a social networking site. The system 100 includes a social networking server 102. The social networking server 102 is in communication with a plurality of user devices 104A through 104N (collectively referred to herein as user devices 104). The social networking server 102 is also in communication with a monitoring server 106, which includes a database 108. The monitoring server 106 is also in communication with user devices 104. Application server 110 is in communication with user devices 104 and the monitoring server 106. The computerized elements of system 100 can be in communication using, for example, the internet, cellular links, and/or any other type of data or voice communication.

The social networking server 102 can be, for example, a single web server with a processor and memory, or a plurality of web servers configured to provide a social networking service to the user devices 104. The social networking services can include, for example, providing computerized services for the user to maintain or update their profile with the social networking site, providing computerized services that facilitate communication with other users of the social networking site, providing computerized services for posting communications or messages, and other services offered through social networking sites. The social networking services can include those service provided by, for example, twitter.com, facebook.com, myspace.com, or linkedin.com. The social networking site provides an application programming interface (API) that facilitates monitoring keywords in messages or other data used within the social networking service (e.g., which can be viewed by user devices .104). Although the following description is directed to an embodiment involving the social networking site twitter.com, the described computerized systems and methods are not so limited and can be applied to other social networking sites, such as facebook.com, myspace.com, or linked in ,com.

The API is an interface implemented by the social networking site that enables other software programs (e.g., a program executed by the monitoring server I06) to interact with the social networking site. The social networking site provides services through the API, and the API allows the other software programs to access the services. For example, the API services can include services to monitor keywords contained within user communications posted in the social networking site, services to post communications (e.g., messages) to users of the social networking site, or services to obtain information about users of the social networking site (e.g., user profile information).

The user devices 104 are computing devices with a processor and memory that can interact with the social networking site. For example, the user devices 104 can include desktop computers, laptop computers, tablet PCs, and/or smart phones. A user of a social networking site can use a user device 104 to log into the social networking site and to use the provided social networking services. A user can use any user device 104; they profile information for a user can be determined independently for a user from the actual user device 104.

The monitoring server 106 is a computing device having a processor and memory that uses the API for the social networking site to monitor one or more configurable keywords. For example, a computer hardware company that specializes in selling computer hard drives may want to automatically monitor user posts (or messages) to the social networking server 102 to identify posts that includes keywords or phrases related to their business. Advantageously, the monitoring server 106 can receive information based on the keywords and react to the keywords as desired (e.g., if a question is posted from a user device 104 about "hard drives," the monitoring server can transmit a link to the user device 104 that, when invoked, establishes a chat connection with a person who is knowledgeable about hard drives and who can answer the question transmitted from the user device 104).

For example, the Twitter social networking site provides an API that allows the monitoring server 106 to monitor keywords contained within tweets. A tweet is a posted message that is viewable by users of the twitter.com site. The monitoring server 106 can interface with the twitter social networking site using the API (e.g., by subscribing to a service through the API, such a notification service that pushes information to programs that implement certain functions of the API) with one or more keywords to receive notifications that the keyword is being tweeted, the number of tweets that include the keyword, the number of followers that can see the tweet, and/or other pertinent information. When the monitoring server 106 identifies a keyword, the monitoring server 106 can send a reply tweet to the user that posted the tweet containing the keyword. The database 108 is configured to store data representing selected messages or tweets (e.g., those that contain the monitored keyword) and an originator of the selected message (e.g., which user device 104 transmitted the selected message to the social networking server 102).

The monitoring server 106 can be in communication with an operator terminal (not shown) that includes a graphical user interface configured to display the data representing messages posted at the social networking server 102. For example, the monitoring server 106 can display information about the identified messages that include the one or more monitored keywords. The information about the messages can include, for example, the date of the message, the number of followers of the user that posted the message (e.g., people who are subscribed to see the particular message and any related messages), the number of friends of the posting user (e.g., the number of people the posting user has established a relationship with in the social networking site), the geographical location of the posting user (e.g., to the country level, state level, city level, etc.), an identifier for the message, a token for the message (e.g., an Open Authorization (OAuth) token), the source of the message (e.g., the user posted the message via the web, via a mobile device, etc.), the content of the message, the number of messages related to the posted message (e.g., the number of messages in the message string that contained the posted message, such as the count of tweets), the user image associated with the posting user (e.g., a picture of the user), the name of the posting user, a user name associated with the posting user in the social networking site (e.g., a screen name for the user), and/or other information gleaned from the message (e.g., based on the posted message itself, a user profile associated with the posting user, or other information from the social networking site).

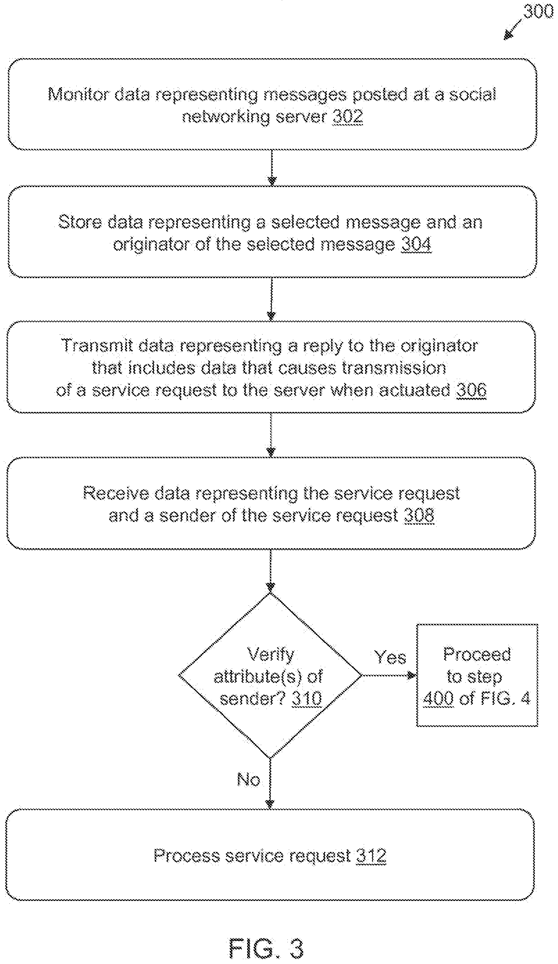

An operator can view the graphical user interface provided by the operator terminal to decide how to respond to the identified message/post. For example, the operator may decide not to respond to the identified message based on one or more criteria associated with the identified message (e.g., geographical area, message content, etc.). Or the operator can decide to send a response to the identified message. This process is described in further detail with respect to FIG. 3.

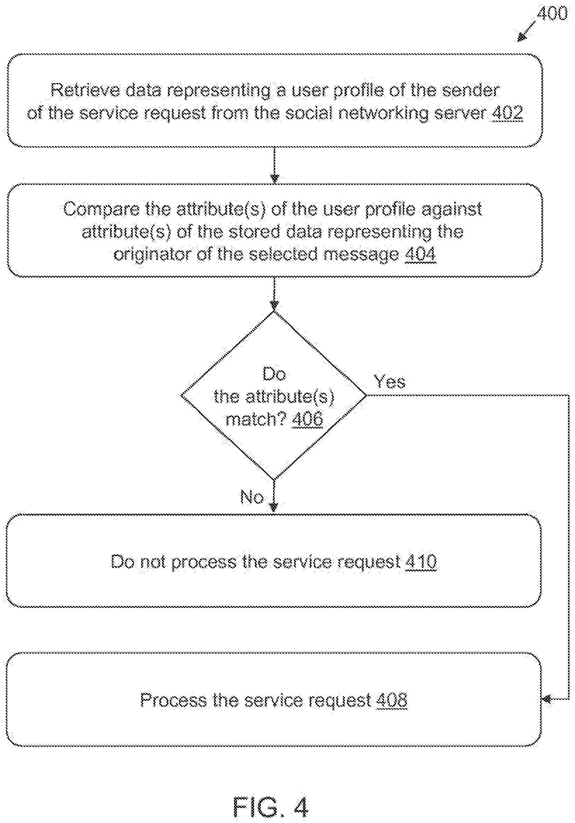

The application server 110 provides one or more services to the user devices 104. The service can include, for example, a chat service (e.g., between the user device 104 and a third party, such as a person knowledgeable about a question posed from the user device 104), an advertisement service (e.g., advertisements related to the keywords of the user's message), a support service (e.g., documents or links to documents related to the user's message), and/or a voice service (e.g., the service facilitates a call between the user and a third party, such as a person knowledgeable about a question posted from the user device 104). For example, as will be further described below, the monitoring server 106 can, through the API, post a message in reply to a posted message, the posted message containing a link (e.g., a URL). The link, once invoked by a user device 104, initiates a service with the application server 110. The monitoring server 106 can authenticate the user device 104 before providing the service to the user (e.g., as described with reference to FIG. 4 below based on a data/user profile associated with the user device 104).

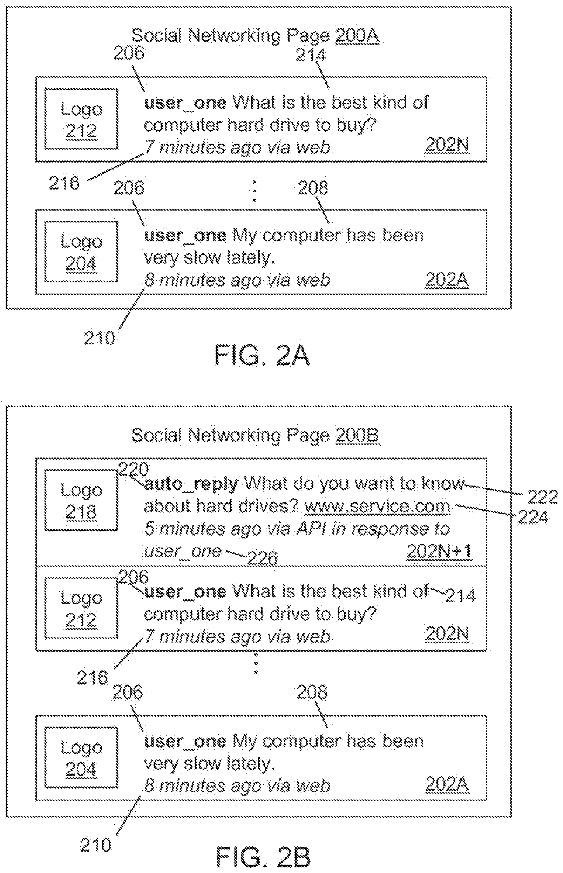

FIGS. 2A and 2B are diagrams of exemplary social networking pages 200A and 200B, respectively, for a social networking site according to the present invention. Social networking page 200A includes posted messages 202A through 202N (collectively posted messages 202). Posted message 202A includes a logo 204, username user_one 206, content 208 (i.e., "My computer has been very slow lately"), and posting information 210 (i.e., "8 minutes ago via web"). The username user_one 206 indicates which user posted the message 202A (e.g., a user of a user device 104). This is advantageous, for example, to tell users apart when multiple user devices 104 are posting messages for a particular message thread or message board. The content 208 is the text that the posting user user one 206 entered for the posted message 202A. The posting information 210 indicates how long ago user_one 206 posted the message 202A (i.e., 8 minutes ago) and how user_one 206 posted the message (i .e., via the web)

Posted message 202N includes a logo 212, username user_one 206, content 214 (i.e., "What is the best kind of computer hard drive to buy?"), and posting information 216 (i.e., "7 minutes ago via web"). Posted messages 202 are used for illustrative purposes only and are not intended to be limiting. One skilled in the art can appreciate that the information contained within the posted messages 202 can be modified without departing from the spirit of the techniques described herein.

Referring to FIG. 1, user_one 206 (where "user_one" is a screen name representative of user device 104 or of an operator of the user device 104) posted message 202A to the social networking server 102. One minute later user_one 206 posted the posted (using a user device 104) message 202N to the social networking server 102. User_one 206 can configure his account with the social networking site to control which other users can see posted messages 202A and 202N. There can be posted messages by other users between posted messages 202A and 202N (e.g., a different user device 104 can post a message in response to posted message 202A). For example, all people following the posts on social networking page 200A can see posted message 202A and can choose to post a message in response. Similarly, for example, any person that user one 206 has established a relationship within the social networking site (e.g., friends) can view the posted message 202A, and/or any user device 104 can view posted message 202A.

The social networking page 200B in FIG. 2B includes posted messages 202A and 202N from FIG. 2A and also includes posted message 202N+1. Posted message 202N+1 includes a logo 218, username auto_reply 220, content 222 (i.e., "What do you want to know about hard drives?"), a link 224 that causes transmission of a service request to the monitoring server 106, and posting information 226 (i.e., "5 minutes ago via API in response to user_one"). The posting information 226 indicates that posted message 202N+1 was posted by auto_reply 220 (e.g., a user with the screen name "auto_reply," which may correspond to an individual user or a company) five minutes ago via an API (e.g., an API to the social networking site provided by social networking server 102, which allows messages to be posted in response to a user's message) in response to the posted message 202N by user_one 206. Message 202N+1 will be discussed in further detail with respect to FIG. 3 below. The posted message 202N+1 can be transmitted automatically (e.g., by the monitoring server 106 based on rules stored in the database 108) or manually (e.g., by an operator of the monitoring server 106).

FIG. 3 is an exemplary flow chart showing an exemplary method 300 for processing a service request. Referring to FIG. 1, at step 302 the monitoring server 106 monitors data representing messages posted at the social networking server 102. At step 304, the monitoring server 106 stores data representing a selected message and an originator of the selected message. At step 306, the monitoring server 106 transmits data representing a reply to the originator of the selected message (e.g., to the originating user device 104) for posting at the social networking server 102. The reply includes data that causes transmission of a service request to the monitoring server 106 when actuated. At step 308, the monitoring server 106 receives data representing the service request and a sender of the service request (e.g., which user device 104 actuated the data that causes transmission of the service request).

At step 310, the monitoring sever .I 06 determines whether to verify one or more attributes of the sender of the service request. For example, the monitoring server 106 can determine whether or not to verify attributes of the sender based on the data of the sender (e.g., the attributes in the data). In some examples, the monitoring server 106 can be configured (e.g., via a stored variable) to automatically verify, or not verify, the attributes of the sender. If the monitoring server 106 is configured to verify one or more attributes, the method 300 proceeds to step 400 of FIG. 4. If the monitoring server is not configured to verify the attributes of the sender, the method 300 proceeds to step 312 and the monitoring server processes the service request.

Referring to step 302, the monitoring server 106 monitors data representing messages posted at the social networking server 102. For example, users of the social networking site Twitter post tweets to the social networking server 102. The monitoring server 106 accesses information about these posted tweets (messages) from the social networking server 102 using, for example, an API provided by Twitter. The monitoring server 106 can be configured to store particular information (or attributes) from the social networking sever 102 using the API. The monitoring server 106 can use the acquired information to determine whether to engage the user that posted the message. In some examples, the monitoring server 106 presents a graphical user interface that displays the acquired information to an operator that decides how to respond to the message (e.g., not to respond or to respond).

For example, referring to FIG. 2A, a computer company that sells hard drives can configure the monitoring server 106 to monitor messages posted to social networking server 102 for particular keywords related to hard drives. For example, the monitoring server 106 can be configured to monitor the content of messages posted at social networking server 102 for the keywords "hard drive" and "buy." Advantageously, if a message includes these keywords, the monitoring server 106 can take appropriate action such that a message is transmitted in response to the posted message (e.g., to provide a link that, once clicked, facilitates setting up a chat session between the user and a third party to help the user with purchasing a hard drive, or to provide an advertisement for hard drives that are provided by the computer company). An exemplary social media monitoring tool is the tracx platform provided by tracx of Hoboken, NJ.

Referring to step 304, the monitoring server 106 can store data for a selected message if the selected message includes data (e.g., keywords in the message content, a particular user name, a posting time of the message, etc.) that the monitoring server 106 is configured to identify in the posted messages. For example, continuing with the computer company example described above with respect to step 302, if the monitoring server 106 identifies a message that includes one or more of the keywords "hard drive" and/or "buy," the monitoring server 106 can store data indicative of the message and/or the originator of the message in database 108, Advantageously, the stored data for the message and/or the originating user can be used to authenticate the requestor of a service request associated with the message,

Referring to step 306, the monitoring server 106 transmits a reply to the originator of the selected message. For example, referring to FIG. 2B, the monitoring server 106 transmits message 202N+1 to user_one 206 using the social networking server 102. in response to message 202N posted by user_one 206. Message 202N+1 includes content 222 and link 224 that causes transmission of a service request to the monitoring server 106. For example, link 224 can be a chat invitation (e.g., an invitation to a two-way chat between the user device 104 and a second device), If a user of a user device 104 clicks the link 224, the user device 104 can be redirected to the application server 110 to open up a chat (which is described in further detail with respect to step 312 below).

Referring further to step 306, some social networking sites provide constraints on who can respond to a posted message. The monitoring server 106 can transmit the reply (e.g., using the API for the social networking site) in such a way that it complies with the social networking site constraints and still responds to the user's posted message. For example, when using Twitter there may not be a way to send a twitter message to a user device 104 if the posting party (e.g., the monitoring server 106) is not following the tweets that included the identified message. Continuing with the computer company example, if the monitoring server 106 is not following the account of user_one 206 (e.g., not following the tweets of user, one 206), then the monitoring server 106 can not send user _one 206 a direct message. To comply with these social networking site constraints, the monitoring server 106 can, for example, send a public tweet and/or send a comment (e.g., a single message to tweeter or a broadcast message to everyone following the tweet).

Referring to step 308, the monitoring server 106 receives data representing the service request. For example, the monitoring server 106 receives data indicative of a user of a user device 104 clicking on the link 224. Depending on the social networking site (and/or how a user configures their account with the social networking site), there may not be any guarantee that the user to whom the monitoring server 106 transmitted message 202N+1 is also the same user that clicked on the link 224. For example, if one or more users are following the message chain of user_one 206 that includes messages 202A, 202N and 202N+1, then not only can user_one 206 click the link 224, but so can any of the other users that are viewing the social networking page 200B. In some examples, any user of the social networking site can view the social networking page 200B (and therefore any user can click the link 224). Therefore, in some embodiments it may be desirable to verify attributes of the sender (e.g., to verify the attributes of the user profile for the user that clicked link 224) to determine whether that the monitoring server 106 will provide the service to the sender. The verification process is described in further detail with respect to FIG. 4.

Referring to step 312, the monitoring server 106 processes the service request. For example, the service request can be a request to initiate a service provided by application server 110. For example, the application server 1 10 can be a chat server, and the service request can be a request to initiate a chat session between the user that initiated the service request and a second user (e.g., through the application server). The monitoring server 106 can process the service request to chat by transmitting a request to application server 110 to establish a chat between the sender of the service request and a third party. Returning to the computer company example, if user_one 206 clicks on link 224, the monitoring server 106 can instruct the application server 110 to set up a chat session between the initiating user and an expert from the computer company. The expert can be, for example, an expert in the field of computer hard drives. Advantageously, this allows the initiating user to have a chat with the expert about hard drives. Such chat conversations allow the initiating user to have live-time discussions to learn information and/or answer any questions they have about a particular topic.

In some examples, the expert is matched up with the initiating user based on one or more criteria. For example, the application server 110 can select the expert based on one or more skills (e.g., technology advisors, social media agents, etc.). Advantageously, the monitoring server (and/or the application server 110) can direct the initiating user to the person who will help the most. In some examples, the expert is selected based on the content of the messages (e.g., messages that contain certain keywords related to the company, keywords indicative of question (e.g., "why" or "?"), etc.). While the monitoring server 106 can select the expert based on the content of the messages, the monitoring server 106 can also select the user based on other criteria (e.g., the initiating user's social media profile). For example, as described above, the monitoring server 106 can select the expert based on other information known about the messages such as, for example, the date of the message, the number of followers or friends, geographical location, etc.

While the term "expert" is used to describe the second person of the chat conversation, this term is used to not only to represent a person with particular knowledge about a field (e.g., a person knowledgeable about computer hard drives), but can also be used to refer to any person who can help the initiating user (e.g., by answering questions, directing them to other websites, providing information, etc.).

In some examples, the service request is an advertisement request. For example, the content of message 202N+1 can direct a viewer to click the link 224 for a coupon. In some examples, the service request is a support request. In some examples, the service request is a voice call request. For example, the service request can include data indicative of a phone number for the requesting user and a request that the requesting user be called at the phone number. In some examples, the user is presented with a dialog box (e.g., as a web page or as an applet) that allows the user to provide their contact information.

FIG. 4 is a flow chart showing an exemplary method 400 for authenticating a service request. Method 400 provides for Open Authorization (OAuth), where the monitoring server 106 can authenticate the sender of the service request without the sender providing additional information (e.g., a username and/or password). At step 402, the monitoring server 106 retrieves data representing a user profile of the sender of the service request from the social networking server 102 (e.g.. retrieves the profile of the sender identified in the data obtained in step 308 of FIG. 3). At step 404, the monitoring server 106 compares one or more attributes of the user profile of the sender against one or more attributes of the stored data representing the originator of the selected message in order to verify the one or more attributes of the user profile. At step 406, the monitoring server 106 determines whether the compared attributes match. If the one or more attributes match, the method proceeds to step 408 and the monitoring server 106 processes the service request. If the one or more attributes do not match, the monitoring server 106 proceeds to step 410 and does not process the service request and optionally can provide a default response (e.g., presentation of a company home web page).

Referring to step 402, the monitoring server 106 can retrieve data representing the sender from the social networking server 102 using, for example, an API provided by the social networking site that is being provided by the social networking server. The monitoring server 106 may request authorization from the sender of the service request before retrieving data about the sender. For example, the monitoring server 106 can transmit an authorization request to the sender (e.g., via a pop-up dialog box, a web page, etc.). The authorization request can be, for example, data representing an access authorization to retrieve the data representing the requesting user's profile from the social networking server 102. The authorization request has a mechanism (e.g., graphical interface buttons, check boxes, etc.) for the sender to indicate either that they do or do not authorize the monitoring server 106 to retrieve data from the social networking sever 102 about them. When the user operates the mechanism, the monitoring server 106 receives data representing a response to the access authorization. If the monitoring server 106 receives data indicative of a denial from the sender, then the monitoring server 106 can terminate method 400 and not retrieve data representing the user from the social networking server 102. If the monitoring server 106 receives data indicative of the sender providing access authorization, then the monitoring server 106 is authorized to request information from the social networking server 102 (e.g., the sender's user profile).

In some examples, the authorization request is embedded in the social networking site. In some examples, when the requesting user clicks link 224, the link 224 can redirect the user to a servlet that prompts the user with the authorization request (e.g., a Java servlet, or some other protocol by which the monitoring server 106 can respond to the HTTP request). This request can be a request to begin the OAuth stage of method 400. If the monitoring server 106 receives authorization, the monitoring server can request any appropriate information from the social networking server 102 (e.g., the user profile). The monitoring server 106 can retrieve stored information for the originator of the selected message from database 108 (e.g., which was stored in step 304 of method 300). The information retrieved from the social networking server 102 can include, for example, any information that the monitoring server 106 can use to verify the user profile against the originator of the selected message. For example, the information retrieved from the social networking server 102 can include the date of the message, the number of followers of the user, the number of friends of the user, the user's geographical location, an identifier for the message, a token for the message, the source of the message, the content of the message, the number of messages related to the posted message, the user's image, the name of the user, a user name associated with the user, and/or other information gleaned from the message.

Referring to steps 404 and 406, the monitoring server 106 can verify one or more attributes of the user profile and the originator of the selected message. In some examples, the monitoring server 106 can verify that the originator of the message is the sender of the service request. For example, the monitoring server 1 06 can compare a person attribute in the user profile to a person attribute in the stored data representing the originator to determine whether the sender is the originator of the selected message, If the person attributes match, then the monitoring server 106 successfully validated that the sender is the originator of the selected message. For example, referring to FIG. 2B, user one 206 posted message 202N, and this information is stored in the database 108. The stored information includes a person attribute indicative of user_one 206. If the user_one 206 clicked the link 224 in message 202N+1, then the monitoring server 106 will receive a person attribute indicative of user_one 206 in response to its request for information about the sender of the service request. Since the person attribute for the originator of message 202N is the same as the person attribute for the sender of the service request, the monitoring server 106 can identify that the same user clicked the link 224. Advantageously, die monitoring server 106 can process the service request (e.g., step 408) since the service request was effected by an intended recipient of the service request.

in some examples, the monitoring server 106 can verify one or more attributes between the user profile and the originator of the selected message that are not unique to the originator of the selected message. For example, the one or more attributes can be shared by a group of people (e.g., and the monitoring server 106 can be configured to engage with members of the particular group). Advantageously, the monitoring server 106 need not verify that the service request was effected by the same user that posted the message, but can verify other characteristics, such as characteristics of user profiles. For example, the monitoring server can verify whether there is any relationship between the originator of the message and the sender of the service request (e.g., if they are friends in the social networking site), whether they are located within a same geographical area, whether they share one or more common interests or hobbies, and/or other attributes. For example, the monitoring server 106 can verify the sender of the service request is a follower of the originator of the selected message. The monitoring server 106 can compare a follower attribute in the user profile to a follower attribute in the stored data representing the originator to determine whether the sender is a follower of the originator of the selected message. Advantageously, by performing such comparisons, the monitoring server 106 can determine that the sender of the service request is likely to share one or more attributes or characteristics with the originator of the message, and therefore is likely to be a proper audience for the service request.

In some examples, the monitoring server 106 verifies the sender of the service request is in the same geographical location as the originator of the message. For example, the monitoring server 106 can compare a location attribute in the user profile to a location attribute in the stored data representing the originator to determine whether the sender is in a same location as the originator of the selected message. Advantageously, by comparing the location information, the monitoring server 106 can verify that, for example, targeted advertisements are provided to appropriate recipients.

Advantageously, the monitoring server 106 can determine if the sender of the service request is the same person as the originator of the selected message based on, for example, a user ID, date, time, location (e.g., the location of the message, based on packet information and geographical location information), and any other attributes relevant to identifying the sender of the service request. Advantageously, because the monitoring server 106 has stored data for the selected message, the monitoring server 106 is not limited to matching the identity of the sender and the originator. As another example, the monitoring server 106 can determine whether the sender of the service request is a "friend" of the selected message. For example, the monitoring server 106 can determine whether the sender has some relationship in the social network to the originator of the selected message (e.g., as indicated between their user profiles). As an illustrative example, the monitoring server 106 can use an identification field in the originator's profile and use the identification field to get all the followers of the originator (e.g., via the social networking site's API). The monitoring server 106 can perform a basic search of the retrieved list of followers to determine whether the sender of the service request is a follower of the originator of the stored message.

Referring to step 408, after the sender of the service request is authenticated, the sender can be redirected based on their user profile. For example, the sender can be redirected to a chat session with an expert. The application server 110 can select the expert based on one or more skills of the expert (e.g., technology advisors, social media agents, etc.) based on the sender's user profile. For example, as described above, the monitoring server 106 can select the expert based on the number of followers or friends in the sender's user profile, the geographical location in the user's profile, etc.

Referring to step 410, the monitoring server 106 can perform other actions even though the monitoring server 106 does not process the service request. For example, the sender of the service request can be directed to a particular web page (e.g., a landing page). For example, the sender can be directed to a default advertisement, a web page that explains the authentication process, a web page that explains why the sender was not provided with the service request, and/or the like.

in some examples, the monitoring server 106 can monitor a first social networking site and respond to messages posted at the first social networking site through a second social networking site. For example, referring to method 300 in FIG. 3, the monitoring server 106 can monitor data indicative of messages posted at social networking server 102. The monitoring server 106 can retrieve data representing a second user profile of the originator of the selected message from a second social networking server (e.g., from a different social networking server than social networking server 102, which is not shown in FIG. 1). Referring to step 306, the monitoring server 106 can transmit data representing the reply to the originator at the second social networking server (e.g., and not through the social networking server 102).

For example, the monitoring server 106 can monitor tweets posted to Twitter (e.g., via the Twitter API). If the monitoring server 106 desires to respond to a tweet (e.g., the tweet includes one or more keywords of interest), the monitoring server 106 can identify one or more additional social networking sites that the originator of the selected message belongs to (e.g., other social networking sites where the originator has an account). For example, the monitoring server 106 can determine that the originator has a Facebook account. The monitoring server 106 can transmit a reply (based on the originator's tweet) to the originator via Facebook instead of through Twitter.

In some examples, the monitoring server 106 stores an aggregated social media profile for the originator comprising any other user profiles (or information) for the originator at other social media services. The monitoring server 106 can also store the data representing the selected message and the originator of the selected message in the aggregated social media profile. Advantageously, the monitoring server 106 can use the aggregated social media profile to respond to the originator at any one of its many social media services. The social media server 102 can provide multiple social networking sites, a single social media server 102 can provide a single social networking site, or any combination thereof. The social networking site can include Twitter, Facebook, Myspace, Linkedin, and/or any other social networking service.

The above-described computerized methods and apparatuses can be implemented in digital and/or analog electronic circuitry, or in computer hardware, firmware, software, or in combinations of them. The implementation can be as a computer program product, i.e., a computer program tangibly embodied in a machine-readable storage device, for execution by, or to control the operation of, a data processing apparatus, e.g., a programmable processor, a computer, and/or multiple computers. A computer program can be written in any form of computer or programming language, including source code, compiled code, interpreted code and/or machine code, and the computer program can be deployed in any form, including as a stand-alone program or as a subroutine, element, or other unit suitable for use in a computing environment. A computer program can be deployed to be executed on one computer or on multiple computers at one or more sites.

The computerized method steps can be performed by one or more processors executing a computer program to perform functions by operating on input data and/or generating output data. Method steps can also be performed by, and an apparatus can be implemented as, special purpose logic circuitry, e.g., a FPGA (field programmable gate array), a FPAA (field-programmable analog array), a CPLD (complex programmable logic device), a PSoC (Programmable System-on-Chip), ASIP (application-specific instruction-set processor), or an ASIC (application-specific integrated circuit). Subroutines can refer to portions of the computer program and/or the processor/special circuitry that implement one or more functions.

Processor suitable for the execution of a computer program include, by way of example, both general and special purpose microprocessors, and any one or more processors of any kind of digital or analog computer. Generally, a processor receives instructions and data from a read-only memory or a random access memory or both. The essential elements of a computer are a processor for executing Instructions and one or more memory devices for storing instructions and/or data. Memory devices, such as a cache, can be used to temporarily store data. Memory devices can also be used for long-term data storage. Generally, a computer also includes, or is operatively coupled to receive data from or transfer data to, or both, one or more mass storage devices for storing data, e.g., magnetic, magneto-optical disks, or optical disks. A computer can also be operatively coupled to a communications network in order to receive instructions and/or data from the network and/or to transfer instructions and/or data to the network. Computer-readable storage devices suitable for embodying computer program instructions and data include all forms of volatile and non-volatile memory, including by way of example semiconductor memory devices, e.g., DRAM, SRAM, EPROM, EEPROM, and flash memory devices; magnetic disks, e.g., internal hard disks or removable disks; magneto-optical disks; and optical disks, e.g., CD, DVD, HD-DVD, and Blu-ray disks. The processor and the memory can be supplemented by and/or incorporated in special purpose logic circuitry.

To provide for interaction with a user, the above described techniques can be implemented on a computer in communication with a display device, e.g., a CRT (cathode ray tube), plasma, or LCD (liquid crystal display) monitor, for displaying information to the user and a keyboard and a pointing device, e.g., a mouse, a trackball, a touchpad. or a motion sensor, by which the user can provide input to the computer (e.g., interact with a user interface element). Other kinds of devices can be used to provide for interaction with a user as well, for example, feedback provided to the user can be any form of sensory feedback, e.g., visual feedback, auditory feedback, or tactile feedback; and input from the user can be received in any form, including acoustic, speech, and/or tactile input.

The above described techniques can be implemented in a distributed computing system that includes a back-end component. The back-end component can, for example, be a data server, a middleware component, and/or an application server. The above described techniques can be implemented in a distributed computing system that includes a front-end component. The front-end component can, for example, be a client computer having a graphical user interface, a Web browser through which a user can interact with an example implementation, and/or other graphical user interfaces for a transmitting device. The above described techniques can be implemented in a distributed computing system that includes any combination of such back-end, middleware, or front-end components.

The computing system can include clients and servers. A client and a server are generally remote from each other and typically interact through a communication network. The relationship of client and server arises by virtue of computer programs running on the respective computers and having a client-server relationship to each other.

The components of the computing system can be interconnected by any form or medium of digital or analog data communication (e.g., a communication network). Examples of communication networks include circuit-based and packet-based networks. Packet-based networks can include, for example, the Internet, a carrier internet protocol (IP) network (e.g., local area network (LAN), wide area network (WAN), campus area network (CAN), metropolitan area network (MAN), home area network (HAN)), a private IP network, an IP private branch exchange (IPBX), a wireless network (e.g., radio access network (RAN), 802.11 network, 802.16 network, general packet radio service (GPRS) network, HiperLAN), and/or other packet-based networks. Circuit-based networks can include, for example, the public switched telephone network (PSTN), a private branch exchange (PBX), a wireless network (e.g., RAN, bluetooth. code-division multiple access (CDMA) network, time division multiple access (TDMA) network, global system for mobile communications (GSM) network), and/or other circuit-based networks.

Devices of the computing system and/or computing devices can include, for example, a computer, a computer with a browser device, a telephone, an IP phone, a mobile device (e.g., cellular phone, personal digital assistant (PDA) device, laptop computer, electronic mail device), a server, a rack with one or more processing cards, special purpose circuitry, and/or other communication devices. The browser device includes, for example, a computer (e.g., desktop computer, laptop computer) with a world wide web browser (e.g., Microsoft^{®} Internet Explorer^{®} available from Microsoft Corporation, Mozilla^{®} Firefox available from Mozilla Corporation). A mobile computing device includes, for example, a Blackberry^{®}. IP phones include, for example, a Cisco^{®} Unified IP Phone 79850 available from Cisco System, Inc, and/or a Cisco^{®} Unified Wireless Phone 7920 available from Cisco System, Inc.

## Claims

1. A computerized method (500) for processing a service request, comprising:
transmitting (502), by a server and in response to a social media message by a remote user, a link associated with predefined criteria, wherein the link causes transmission of a service request to the server when actuated by the remote user;
receiving (504), at the server, data representing the service request including a number of times the link has been invoked prior to the current invocation and/or an amount of time the link has been shown to the remote user;
comparing the data representing the service request with the pre-defined criteria to determine whether to authenticate the service request (506);
when the service request is authenticated, processing the service request (508) to initiate an online text chat, audio chat and/or video chat with the remote user; and
when the service request is not authenticated (510), disabling the service request.

2. A computerized method (500) according to claim 1, wherein the pre-defined criteria comprises a time limit, wherein the time limit is an amount of time the link is active until the link expires.

3. A computerized method (500) according to claim 2, wherein the service request is authenticated if the amount of time the link has been shown to the remote user is less than the time limit.

4. A computerized method (500) according to claim 2 or claim 3, wherein the service request is not authenticated (110) if the amount of time the link has been shown to the remote user is more than the time limit.

5. A computerized method (500) according to claim 1, wherein the pre-defined criteria comprises a maximum number of users invoking the request.

6. A computerized method (500) according to claim 5, wherein the service request is authenticated if the number of times the link has been invoked prior to the current invocation is less than the maximum number of users invoking the request.

7. A computerized method (500) according to claim 5 or claim 6, wherein the service request is not authenticated if the number of times the link has been invoked prior to the current invocation is more than the maximum number of users invoking the request.

8. A computerized method (500) according to claim 1, wherein:
the pre-defined criteria comprises a future time period;
the service request is authenticated (508) if the service request is received within the future time period; and
the service request is not authenticated (510) if the service request is not received within the future time period.

9. A computerized method (500) according to any preceding claim, wherein the data representing the service request includes data about the sender of the service request.

10. A system comprising:
a processor configured to perform operations including the method (500) of any one of claims 1-9.

11. A computer-program product tangibly embodied in a non-transitory machine-readable storage medium having instructions stored thereon, the instructions operable to cause a processing apparatus to perform the method (500) of any one of claims 1-9.

## Patentansprüche

1. Computerverfahren (500) zur Verarbeitung einer Dienstanforderung, das Folgendes umfasst:
Übertragen (502), durch einen Server und als Antwort auf eine Social-Media-Nachricht von einem entfernten Benutzer, eines Links, der vordefinierten Kriterien zugeordnet ist, wobei der Link die Übertragung einer Dienstanforderung an den Server bewirkt, wenn er von dem entfernten Benutzer aktiviert wird;
Empfangen (504) am Server von Daten, die die Dienstanforderung darstellen, einschließlich einer Anzahl von Malen, die der Link vor dem aktuellen Abrufen abgerufen wurde, und/oder eines Zeitraums, über den hinweg der Link dem entfernten Benutzer angezeigt wurde;
Vergleichen der Daten, die die Dienstanforderung darstellen, mit den vordefinierten Kriterien, um zu bestimmen, ob die Dienstanforderung authentifiziert werden soll (506);
wenn die Dienstanforderung authentifiziert wurde, Verarbeiten der Dienstanforderung (508), um eine Online-Text-Konversation, Audio-Konversation und/oder Video-Konversation mit dem entfernten Benutzer zu initiieren; und
wenn die Dienstanforderung nicht authentifiziert wurde (510), Deaktivieren der Dienstanforderung.

2. Computerverfahren (500) nach Anspruch 1, wobei die vordefinierten Kriterien eine Zeitgrenze umfasst, wobei die Zeitgrenze ein Zeitraum ist, über den hinweg der Link aktiv ist, bevor der Link verfällt

3. Computerverfahren (500) nach Anspruch 2, wobei die Dienstanforderung authentifiziert wird, wenn der Zeitraum, über den hinweg der Link dem entfernten Benutzer angezeigt wurde, innerhalb der Zeitgrenze liegt.

4. Computerverfahren (500) nach Anspruch 2 oder Anspruch 3, wobei die Dienstanforderung nicht authentifiziert wird (110), wenn der Zeitraum, über den hinweg der Link dem entfernten Benutzer angezeigt wurde, die Zeitgrenze überschreitet.

5. Computerverfahren (500) nach Anspruch 1, wobei die vordefinierten Kriterien eine Höchstzahl an Benutzern, die die Anfrage abrufen, umfasst.

6. Computerverfahren (500) nach Anspruch 5, wobei die Dienstanforderung authentifiziert wird, wenn die Anzahl von Malen, die der Link vor dem aktuellen Abrufen abgerufen wurde, unter der Höchstzahl an Benutzern, die die Anfrage abrufen, liegt.

7. Computerverfahren (500) nach Anspruch 5 oder Anspruch 6, wobei die Dienstanforderung nicht authentifiziert wird, wenn die Anzahl von Malen, die der Link vor dem aktuellen Abrufen abgerufen wurde, die Höchstzahl an Benutzern, die die Anfrage abrufen, überschreitet

8. Computerverfahren (500) nach Anspruch 1, wobei:
die vordefinierten Kriterien einen zukünftigen Zeitraum umfassen;
die Dienstanforderung authentifiziert wird (508), wenn die Dienstanforderung innerhalb des zukünftigen Zeitraums empfangen wird; und
die Dienstanforderung nicht authentifiziert wird (510), wenn die Dienstanforderung nicht innerhalb der zukünftigen Zeitraums empfangen wird.

9. Computerverfahren (500) nach einem der vorangegangenen Ansprüche, wobei die Daten, die die Dienstanforderung darstellen, Daten über den Sender der Dienstanforderung umfassen.

10. System, das Folgendes umfasst:
einen Prozessor, der dazu ausgelegt ist, Arbeitsschritte einschließlich eines Verfahrens (500) nach einem der Ansprüche 1 bis 9 durchzuführen.

11. Computerprogrammprodukt, das greifbar in einem nichttransitorischen maschinenlesbaren Speichermedium verkörpert ist, auf dem Befehle gespeichert sind, wobei die Befehle ausführbar sind, um eine Verarbeitungsvorrichtung zu veranlassen, ein Verfahren (500) nach einem der Ansprüche 1 bis 9 durchzuführen.

## Revendications

1. Procédé informatisé (500) de traitement d'une demande de service, comprenant les étapes consistant à :
transmettre (502), par l'intermédiaire d'un serveur et en réponse à un message de média social par un utilisateur distant, un lien associé à des critères prédéfinis, dans lequel le lien provoque une transmission d'une demande de service au serveur lorsqu'il est actionné par l'utilisateur distant ;
recevoir (504), au niveau du serveur, des données représentant la demande de service comprenant un nombre de fois où le lien a été invoqué avant l'invocation en cours et/ou une quantité de temps où le lien a été présenté à l'utilisateur distant ;
comparer les données représentant la demande de service aux critères prédéfinis pour déterminer s'il faut authentifier ou non la demande de service (506) ;
lorsque la demande de service est authentifiée, traiter la demande de service (508) pour initier une conversation textuelle, une conversation audio et/ou une conversation vidéo en ligne avec l'utilisateur à distance ; et
lorsque la demande de service n'est pas authentifiée (510), désactiver la demande de service.

2. Procédé informatisé (500) selon la revendication 1, dans lequel les critères prédéfinis comprennent une limite de temps, dans lequel la limite de temps est une durée pendant laquelle le lien est actif jusqu'à ce que le lien expire.

3. Procédé informatisé (500) selon la revendication 2, dans lequel la demande de service est authentifiée si la durée pendant laquelle le lien a été présentée à l'utilisateur distant est inférieure à la limite de temps.

4. Procédé informatisé (500) selon la revendication 2 ou la revendication 3, dans lequel la demande de service n'est pas authentifiée (110) si la durée pendant laquelle le lien a été présenté à l'utilisateur distant est supérieure à la limite de temps.

5. Procédé informatisé (500) selon la revendication 1, dans lequel les critères prédéfinis comprennent un nombre maximal d'utilisateurs invoquant la demande.

6. Procédé informatisé (500) selon la revendication 5, dans lequel la demande de service est authentifiée si le nombre de fois où le lien a été invoqué avant l'invocation en cours est inférieur au nombre maximum d'utilisateurs invoquant la demande.

7. Procédé informatisé (500) selon la revendication 5 ou la revendication 6, dans lequel la demande de service n'est pas authentifiée si le nombre de fois où le lien a été invoqué avant l'invocation en cours est supérieur au nombre maximal d'utilisateurs invoquant la demande.

8. Procédé informatisé (500) selon la revendication 1, dans lequel :
les critères prédéfinis comprennent une période de temps future ;
la demande de service est authentifiée (508) si la demande de service est reçue au cours de la période de temps future ; et
la demande de service n'est pas authentifiée (510) si la demande de service n'est pas reçue dans la période de temps future.

9. Procédé informatisé (500) selon l'une quelconque des revendications précédentes, dans lequel les données représentant la demande de service comprennent des données concernant l'expéditeur de la demande de service.

10. Système comprenant :
un processeur configuré pour effectuer des opérations comprenant le procédé (500) selon l'une quelconque des revendications 1 à 9.

11. Produit de programme informatique incorporé de manière tangible dans un support de stockage lisible par machine non transitoire sur lequel sont stockées des instructions, les instructions pouvant être mises en œuvre pour amener un appareil de traitement à exécuter le procédé (500) selon l'une quelconque des revendications 1 à 9.
